# EUROPEAN PATENT APPLICATION

(11) **EP 4 844 024 A1**
(43) Date of publication of application: **25.11.2026**
(21) Application number: 25741929.1
(22) Date of filing: 14.01.2025
(51) Int. Cl.: C08L 29/04, B32B 27/30, C08J 5/18, C08K 5/053

(54) **RESIN COMPOSITION, FILM OR SHEET, AND MULTILAYER STRUCTURE**

(30) Priority: 15.01.2024 JP 2024003886
(71) Applicant: Mitsubishi Chemical Corporation, Tokyo 100-8251 (JP)
(72) Inventor: MATSUMOTO, Taisei, Tokyo 100-8251 (JP); SAKA, Takahiro, Tokyo 100-8251 (JP); TANIGUCHI, Masahiko, Tokyo 100-8251 (JP)
(74) Representative: Vossius & Partner Patentanwälte Rechtsanwälte mbB
(86) International application number: PCT/JP2025/000889
(87) International publication number: WO 2025/154704

(57) **Abstract**

The present invention provides a resin composition containing a polyvinyl alcohol-based resin and exhibiting excellent melt viscosity stability during melt molding. The resin composition of the present invention contains a polyvinyl alcohol-based resin having a primary hydroxyl group on a side chain and 1,2-butanediol; the film and sheet of the present invention are formed from the resin composition of the present invention; and the multilayer structure of the present invention includes at least one layer of the film or sheet of the present invention.

## Description

### Technical Field

The present invention relates to a resin composition containing a polyvinyl alcohol-based resin, a film or sheet formed from the resin composition, and a multilayer structure including the film or the sheet.

### Background Art

A polyvinyl alcohol-based resin (hereinafter, polyvinyl alcohol may be abbreviated as "PVA") is excellent in toughness, heat resistance, transparency, oil resistance, biodegradability, and the like, and further has characteristics such as not generating harmful gases upon incineration. Therefore, it is molded into films or sheets and used for various packaging materials (e.g., for clothing, agricultural chemicals, and detergents), agricultural films such as greenhouse films and curtains, and the like.

In general, a molded article such as a container or a film is produced by melt molding from the viewpoint of productivity.

Meanwhile, although it is known that a molded article of polyvinyl alcohol (PVA) is difficult to be produced by heat melt molding due to its melting point and decomposition temperature being close, a modified PVA-based resin that can be melt-molded has been also proposed. For example, Patent Literature 1 and Patent Literature 2 each describe a PVA-based resin having a side-chain 1,2-diol structure.

### Citation List

### Patent Literature

Patent Literature 1: JP 2004-75866 A
Patent Literature 2: JP 2006-89538 A

### Summary of Invention

### Technical Problem

According to studies by the present inventors, when melt molding of a PVA-based resin is continuously performed for a long period of time, the viscosity of the PVA-based resin changes significantly and increases, leaving room for improvement in molding stability. Further, because thermal degradation products may be generated during melt molding, there is also room for improvement in thermal stability.

The present invention has been made in view of the above circumstances, and an object thereof is to provide a resin composition containing a PVA-based resin and having excellent melt viscosity stability during melt molding, i.e., excellent molding stability.

### Solution to Problem

The present inventors have found that a resin composition prepared by incorporating 1,2-butanediol into a PVA-based resin exhibits improved melt viscosity stability during melt molding as compared with a PVA-based resin alone, thereby completing the present invention.

That is, the gist of the present invention is as follows.

Aspect 1 of the present invention is a resin composition containing a polyvinyl alcohol-based resin having a primary hydroxyl group on a side chain and 1,2-butanediol.

Aspect 2 of the present invention is the resin composition according to Aspect 1, wherein a content of 1,2-butanediol in the resin composition is 0.1 to 1000 ppm.

Aspect 3 of the present invention is the resin composition according to Aspect 1 or 2, wherein a content of 1,2-butanediol in the resin composition is 0.5 to 400 ppm.

Aspect 4 of the present invention is the resin composition according to any one of Aspects 1 to 3, wherein the polyvinyl alcohol-based resin having a primary hydroxyl group on a side chain has a structural unit represented by Formula (3) described below.

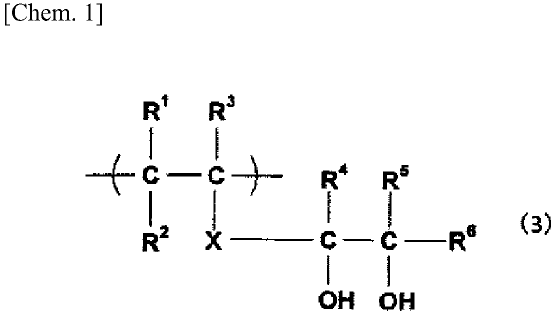

In Formula (3), R¹ to R⁶ each independently represent a hydrogen atom or an alkyl group having from 1 to 4 carbons, and X represents a single bond or a binding chain.

Aspect 5 of the present invention is a film or sheet formed from the resin composition described in any one of Aspects 1 to 4.

Aspect 6 of the present invention is a multilayer structure including at least one layer of the film or sheet described in Aspect 5.

### Advantageous Effects of Invention

The resin composition of the present invention has excellent melt viscosity stability during melt molding, and thus enables stable molding. The resin composition of the present invention is suitable for producing various molded products such as resin containers and resin films. Because the resin composition contains a polyvinyl alcohol-based resin, it is particularly useful as a packaging material.

### Description of Embodiments

Hereinafter, the resin composition of the present invention and its use will be described in detail.
In this specification, with respect to numerical ranges described stepwise, the upper limit value or lower limit value of a numerical range of one step may be optionally combined with the upper limit value or lower limit value of a numerical range of another step. In a numerical range described herein, the upper limit value or the lower limit value of the numerical range can be replaced by a value shown in Examples. In this specification, when the term "weight" is used, it may be read as "mass."

### Resin Composition

The resin composition of the present invention is a resin composition containing a polyvinyl alcohol-based resin having a primary hydroxyl group on a side chain (hereinafter also referred to as a "side-chain primary hydroxyl group-containing PVA-based resin") and 1,2-butanediol.

### PVA-Based Resin Having Primary Hydroxyl Group on Side Chain

In this specification, the side-chain primary hydroxyl group-containing PVA-based resin is a modified PVA-based resin containing a structural unit having a primary hydroxyl group on a side chain; specifically, it refers to a modified PVA-based resin containing a structural unit having a primary hydroxyl group on a side chain, in addition to a vinyl alcohol unit represented by the following Formula (1) constituting polyvinyl alcohol, and a vinyl ester unit represented by the following Formula (2), which is an unsaponified moiety. The vinyl ester unit is contained when the degree of saponification is less than 100%.

In the resin composition of the present invention, it is preferable to use the side-chain primary hydroxyl group-containing PVA-based resin as the PVA-based resin, because melt moldability is improved. The number of primary hydroxyl groups in the side-chain primary hydroxyl group-containing PVA-based resin is preferably 1 to 5, more preferably 1 to 2, and particularly preferably 1. It is also preferable that the resin have a secondary hydroxyl group in addition to the primary hydroxyl group.

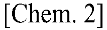

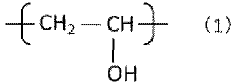

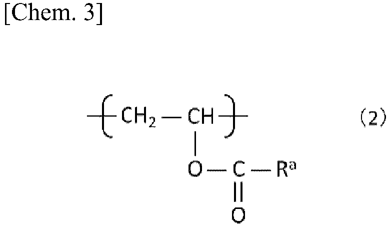

In Formula (2), R^{a} is a group derived from the type of vinyl ester monomer used; for example, when a vinyl acetate monomer is used, Ra is a methyl group.

Examples of the vinyl ester-based monomer described above include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. Vinyl acetate is preferably used for economical reasons.

As the structural unit having a primary hydroxyl group on a side chain, a structural unit having a 1,2-diol on a side chain represented by the following Formula (3) is preferable.

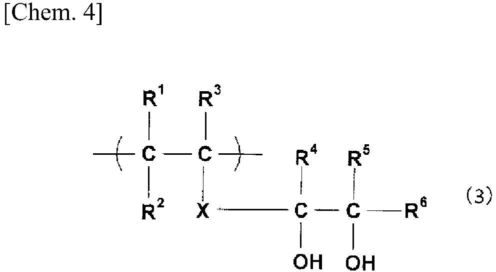

In Formula (3), R¹ to R⁶ each independently represent a hydrogen atom or an alkyl group having from 1 to 4 carbons, and X represents a single bond or a binding chain.

Examples of the alkyl group having from 1 to 4 carbons include a methyl group, an ethyl group, an n-propyl group, an isopropyl group, an n-butyl group, an isobutyl group, and a tert-butyl group. The alkyl group may have a substituent such as a halogen group, a hydroxyl group, an ester group, a carboxylic group, or a sulfonate group. R¹ to R⁶ are each more preferably a hydrogen atom.

All of R¹ to R⁶ may be the same or different; however, it is preferable that all of them are hydrogen atoms.

When all of R¹ to R⁶ are hydrogen atoms, reactivity with an adhesive resin such as an acid-modified polyolefin-based resin is improved, which is preferable from the viewpoint that formation of a laminate becomes easy.

In Formula (3), X represents a single bond or a binding chain. Examples of the binding chain include hydrocarbon groups such as an alkylene group, an alkenylene group, an alkynylene group, a phenylene group, and a naphthylene group (these hydrocarbon groups may be substituted with a halogen atom such as a fluorine atom, a chlorine atom, or a bromine atom), -O-, -(CH₂O)ₘ-, -(OCH₂)ₘ-, -(CH₂O)ₘCH₂-, -CO-, -COCO-, -CO(CH₂)ₘCO-, - CO(C₆H₄)CO-, -S-, -CS-, -SO-, -SO₂-, -NR-, -CONR-, -NRCO-, -CSNR-, -NRCS-, -NRNR-, -HPO₄-, -Si(OR)₂-, -OSi(OR)₂-, -OSi(OR)₂O-, -Ti(OR)₂-, -OTi(OR)₂-, -OTi(OR)₂O-, - Al(OR)-, -OAl(OR)-, and -OAl(OR)O- (wherein R is each independently an optional substituent, preferably a hydrogen atom or an alkyl group, and m is an integer of 1 to 5).

From the viewpoint of stability during production or use, X is preferably a single bond, an alkylene group having 6 or less carbons (in particular, a methylene group), or - CH₂OCH₂-. Among these, from the viewpoint of thermal stability and from the viewpoint of stability at high temperatures or under acidic conditions, a single bond is most preferred.

Accordingly, the most preferred structural unit represented by Formula (3) is a side-chain 1,2-diol-containing structural unit described in the following Formula (3a). A structural unit having a 1,2-diol on a side chain is referred to as a "side-chain 1,2-diol-containing structural unit," and a PVA-based resin containing a structural unit having a 1,2-diol on a side chain may be referred to as a "side-chain 1,2-diol-containing PVA-based resin."

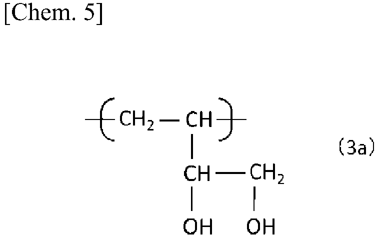

The identification of the 1,2-diol structural units in the PVA-based resin and the measurement of the content (mole fraction) thereof can be determined from the ¹H-NMR spectrum (solvent: DMSO-d6; internal standard: tetramethylsilane) of a completely saponified PVA-based resin; specifically, the content can be calculated from the peak areas derived from hydroxyl protons, methine protons, and methylene protons in the 1,2-diol units, methylene protons in the main chain, protons of hydroxyl groups bound to the main chain, and the like.

The degree of modification (content) of the side-chain primary hydroxyl group-containing PVA-based resin (preferably, the side-chain 1,2-diol-containing PVA-based resin) is preferably 0.1 to 20 mol%, more preferably 0.5 to 15 mol%, still more preferably 1 to 10 mol%, and particularly preferably 2 to 8 mol%. When such a degree of modification is too low, reactivity with an adhesive resin such as an acid-modified polyolefin-based resin tends to decrease, whereas when it is too high, the crystallization rate becomes excessively low, and the laminate tends to deform in the case of formation of a laminate with another resin, and the appearance tends to deteriorate.

The number-average degree of polymerization (measured in accordance with JIS K 6726: 1994) of the side-chain primary hydroxyl group-containing PVA-based resin (preferably, the side-chain 1,2-diol-containing PVA-based resin) is preferably 150 or more, more preferably 200 or more, still more preferably 250 or more, and particularly preferably 300 or more. Meanwhile, the number-average degree of polymerization is preferably 4000 or less, more preferably 2000 or less, still more preferably 800 or less, and particularly preferably 600 or less. When the average degree of polymerization is equal to or greater than the above lower limit value, a stable shape tends to be readily formed during melt molding, whereas when it is equal to or less than the above upper limit value, the viscosity of the resin composition does not become excessively high, and molding tends to be easier.

As an index of the average degree of polymerization of the side-chain primary hydroxyl group-containing PVA-based resin, the viscosity when the resin is prepared into an aqueous solution may be used. The viscosity of a 4 wt.% aqueous solution at 20°C measured in accordance with JIS K 6726: 1994 is preferably 1.5 mPa·s or more, more preferably 2 mPa·s or more, and particularly preferably 2.5 Pa·s or more. Meanwhile, the viscosity is preferably 20 mPa·s or less, more preferably 12 mPa·s or less, and particularly preferably 8 mPa·s or less. When the viscosity is equal to or greater than the above lower limit value, a stable shape tends to be readily formed during melt molding, whereas when it is equal to or less than the above upper limit value, molding tends to be easier.

The side-chain primary hydroxyl group-containing PVA-based resin may be produced by saponifying a copolymer obtained using a copolymerizable monomer. Examples of the copolymerizable monomer (modifying monomer) that may be used include, for example, olefins such as ethylene, propylene, isobutylene, α-octene, α-dodecene, and α-octadecene; unsaturated acids such as acrylic acid, methacrylic acid, crotonic acid, maleic acid, maleic anhydride, and itaconic acid, and salts thereof, and mono- or dialkyl esters thereof; nitriles such as acrylonitrile and methacrylonitrile; amides such as acrylamide and methacrylamide; olefin sulfonic acids such as ethylenesulfonic acid, allylsulfonic acid, and methallylsulfonic acid, and salts thereof; alkyl vinyl ethers; N-(acrylamidomethyl)trimethylammonium chloride; allyltrimethylammonium chloride; dimethylallyl vinyl ketone; N-vinylpyrrolidone; vinyl chloride; vinylidene chloride; polyoxyalkylene (meth)allyl ethers such as polyoxyethylene (meth)allyl ether and polyoxypropylene (meth)allyl ether; polyoxyalkylene (meth)acrylates such as polyoxyethylene (meth)acrylate and polyoxypropylene (meth)acrylate; polyoxyalkylene (meth)acrylamides such as polyoxyethylene (meth)acrylamide and polyoxypropylene (meth)acrylamide; polyoxyethylene (1-(meth)acrylamido-1,1-dimethylpropyl) ester; polyoxyethylene vinyl ether; polyoxypropylene vinyl ether; polyoxyethylene allylamine; polyoxypropylene allylamine; polyoxyethylene vinylamine; polyoxypropylene vinylamine; hydroxyl group-containing α-olefins such as 3-buten-1-ol, 4-penten-1-ol, and 5-hexen-1-ol; and derivatives such as acylated products thereof.

The degree of saponification of such a side-chain primary hydroxyl group-containing PVA-based resin is preferably 70 mol% or more, more preferably 80 mol% or more, and particularly preferably 85 mol% or more. Meanwhile, the degree of saponification is preferably 100 mol% or less, more preferably 99.9 mol% or less, and particularly preferably 99.7 mol% or less. When such a degree of saponification is equal to or greater than the above lower limit value, gas barrier properties tend to be improved.

The degree of saponification of the side-chain primary hydroxyl group-containing PVA-based resin is measured in accordance with JIS K 6726: 1994.

The PVA-based resin that can be used in the resin composition of the present invention may be one type or a mixture of two or more types. When a mixture of two or more types is used, examples include combinations of an unmodified PVA-based resin and a side-chain primary hydroxyl group-containing PVA-based resin, and combinations of different types of modified PVA-based resin and a side-chain primary hydroxyl group-containing PVA-based resin. Combinations of side-chain primary hydroxyl group-containing PVA-based resins having different degrees of saponification, degrees of polymerization, degrees of modification, and the like may also be used.

The resin composition contains the PVA-based resin in an amount of preferably 80 mass% or more, more preferably 90 mass% or more, and even more preferably 95 mass% or more.

### 1,2-Butanediol

When 1,2-butanediol is incorporated into a PVA-based resin having a primary hydroxyl group on a side chain, melt viscosity stability can be improved.

Although the reason therefor is not clear, it is presumed that, by incorporating 1,2-butanediol into the PVA-based resin having a primary hydroxyl group on a side chain, a plasticizing effect is exhibited in the molten state, and, upon solidification after melting, 1,2-butanediol acts like a nucleating agent to promote crystallization.

The content of 1,2-butanediol in the resin composition of the present invention (per total mass of the resin composition) is preferably 0.1 to 1000 ppm, more preferably 0.3 to 600 ppm, still more preferably 0.5 to 400 ppm, even more preferably 0.7 to 350 ppm, particularly preferably 1.0 to 300 ppm, and most preferably 3.0 to 280 ppm. That is, the lower limit value of the content of 1,2-butanediol in the resin composition is, in increasing order of preference, 0.1 ppm or more, 0.3 ppm or more, 0.5 ppm or more, 0.7 ppm or more, 1.0 ppm or more, and 3.0 ppm or more; and the upper limit value is, in increasing order of preference, 1000 ppm or less, 600 ppm or less, 400 ppm or less, 350 ppm or less, 300 ppm or less, and 280 ppm or less.

When the content of 1,2-butanediol in the resin composition is equal to or greater than the above lower limit value, melt viscosity stability is favorable. When the content of 1,2-butanediol in the resin composition is equal to or less than the above upper limit value, the glass transition temperature (Tg) increases due to interaction with the PVA-based resin, and the heat resistance of the molded article is favorable.

The content of 1,2-butanediol in the resin composition can be measured using a GC/MS apparatus equipped with a dynamic headspace apparatus. Specifically, measurement is performed under the conditions described below.

### Dynamic Headspace Conditions

- Thermal desorption system: TDS-3/CIS4 (available from Gerstel K.K.)
- Sample amount: about 5 to 15 mg
- Heating conditions: 150°C for 30 minutes
   GC/MS Measurement Conditions
- GC unit: Agilent 6890 GC (available from Agilent Technologies, Inc.)
- Column: DB-WAX (crosslinked polyethylene glycol (PEG) capillary column)

- Column temperature: held at 40°C for 5 minutes → increased at 10°C/min to 250°C → held at 250°C for
   15 minutes
   - Inlet temperature (CIS4): -150°C (trapping) → 250°C
   - Carrier gas: helium
   - Column flow rate: 1.0 mL/min
   - Split ratio: 1/30
   - MS unit: Agilent 5973 MSD (available from Agilent Technologies, Inc.)
   - Mode: SCAN mode

### Additional Components

### 1. Plasticizer

The resin composition of the present invention may contain a plasticizer, as long as the effects of the present invention (melt viscosity stability during melt molding and thermal stability) are not impaired.

Examples of the plasticizer include aliphatic polyhydric alcohols (e.g., ethylene glycol, hexanediol, glycerin, trimethylolpropane, diglycerin, and the like); compounds obtained by adding ethylene oxide to a polyhydric alcohol; various alkylene oxides (e.g., ethylene oxide, propylene oxide, mixed adducts of ethylene oxide and propylene oxide, and the like); saccharides (e.g., sorbitol, mannitol, pentaerythritol, xylitol, arabinose, ribulose, and the like); phenol derivatives such as bisphenol A and bisphenol S; amide compounds such as N-methylpyrrolidone; and glucosides such as α-methyl-D-glucoside.

### 2. Additional Resin

The resin composition of the present invention may contain an additional polymer (resin) in a range (e.g., less than 30 mass% of the resin composition) such that the effects of the present invention are not impaired. Examples of the polymer (resin) that may be contained include various thermoplastic resins, such as polyamide, polyester, polyethylene, polypropylene, and polystyrene.

### 3. Additional Additive

As necessary, the resin composition of the present invention may contain a reinforcing agent, a filler, a pigment, a dye, a lubricant, an antioxidant, an antistatic agent, an ultraviolet absorber, a thermal stabilizer, a light stabilizer, a surfactant, an antimicrobial agent, a desiccating agent, an antiblocking agent, a flame retardant, a crosslinking agent, a curing agent, a foaming agent, a nucleating agent, or the like in a range (e.g., 10 mass% or less of the resin composition) such the effects of the present invention are not impaired.

The resin composition of the present invention having the above-described composition exhibits favorable thermal stability and molding stability due to the coexistence of 1,2-butanediol, without impairing the properties of the PVA-based resin.

### Method for Producing Resin Composition

Methods for producing a resin composition having the above-described composition include, for example, (i) a method of mixing 1,2-butanediol with a slurry obtained after saponification of the PVA-based resin having a primary hydroxyl group on a side chain, (ii) a method of mixing 1,2-butanediol with particles obtained by filtration of the PVA-based resin having a primary hydroxyl group on a side chain after saponification, and (iii) a method of mixing 1,2-butanediol with the PVA-based resin having a primary hydroxyl group on a side chain in a molten state. Method (i) is preferred, because a resin composition in which 1,2-butanediol is uniformly dispersed can be produced.

When the resin composition contains an additional component other than the side-chain primary hydroxyl group-containing PVA-based resin and 1,2-butanediol, the additional component may be mixed simultaneously with 1,2-butanediol or may be mixed subsequent to 1,2-butanediol.

### Melt Molded Article of Resin Composition and Production Method Therefor

The resin composition of the present invention is melt-moldable, and a melt extrusion molding method generally used for thermoplastic resins can be employed.

Accordingly, the resin composition of the present invention can be used for melt-molded articles requiring gas barrier properties, particularly melt-molded films, stretched films, bags formed of sheets, containers such as cups, trays, tubes, and bottles, and lid materials.

The present invention provides a film or sheet formed from the resin composition of the present invention described above. A melt-molded article containing the resin composition of the present invention may be a single-layer structure formed from the resin composition of the present invention, or may be a multilayer structure combined with another layer. The present invention also provides a multilayer structure including at least one layer of a film or sheet formed from the resin composition of the present invention. The multilayer structure is used as a structure having two or more laminated layers in which the film or sheet formed from the resin composition of the present invention is laminated with another thermoplastic resin, paper, or the like. In the multilayer structure, a layer formed from the resin composition of the present invention (resin composition layer) serves as a gas barrier layer.

Examples of the multilayer structure including the resin composition layer of the present invention as a gas barrier layer include coffee capsules; food packaging materials such as shrink films; pharmaceutical packaging materials; packaging materials for cosmetics such as cases for lotion and foundation; packaging materials for metal parts; packaging materials for electronic parts; packaging materials for articles for which deterioration in properties due to oxidation or moisture absorption should be suppressed; packaging materials for substances for which odor transfer and odor leakage are of concern; and multilayer structures used for various agricultural sheets and agricultural materials such as mulch sheets, fumigation sheets, seedling-raising trays, and covering sheets.

Examples of the melt molding method that can be applied include injection molding and extrusion molding. Extrusion molding is particularly suitable as a method for forming a film or sheet, and examples thereof include a T-die method and an inflation method (tubular film method). In addition to a single-layer extrusion, multilayer extrusion may be employed. For the production of a multilayer structure in which films are laminated, a multilayer extrusion (coextrusion molding) is preferred.

The resultant film or sheet may be subjected to secondary processing such as uniaxial or biaxial stretching. Since the resin composition of the present invention has excellent stretchability, stretching treatment is preferably performed to improve the strength of the film or to further improve gas barrier properties.

### Examples

The present invention will be further described below with reference to Examples and Comparative Examples, but the present invention is not limited to the following Examples. In the following Examples and Comparative Examples, "parts" are based on mass unless otherwise specified.

### Measurement and Evaluation Methods

### 1. Degree of Saponification (mol%)

The degree of saponification was measured in accordance with JIS K 6726: 1994.

### 2. Number-Average Degree of Polymerization

The number-average degree of polymerization was measured in accordance with JIS K 6726: 1994.

### 3. Degree of Modification (Mol%)

The degree of modification was calculated from an integral value measured by ¹H-NMR (300 MHz proton NMR; d₆-DMSO solution; internal standard: tetramethylsilane; 50°C).

### 4. Measurement of 1,2-Butanediol Amount

The amount of 1,2-butanediol was measured under the conditions described below using a GC/MS apparatus equipped with a dynamic headspace apparatus.

### Dynamic Headspace Conditions

- Thermal desorption system: TDS-3/CIS4 (available from Gerstel K.K.)
- Sample amount: about 5 to 15 mg
- Heating conditions: 150°C for 30 minutes
   GC/MS Measurement Conditions
- GC unit: Agilent 6890 GC (available from Agilent Technologies, Inc.)
- Column: DB-WAX (crosslinked polyethylene glycol (PEG) capillary column)

- Column temperature: held at 40°C for 5 minutes → increased at 10°C/min to 250°C → held at 250°C for
   15 minutes
   - Inlet temperature (CIS4): -150°C (trapping) → 250°C
   - Carrier gas: helium
   - Column flow rate: 1.0 mL/min
   - Split ratio: 1/30
   - MS unit: Agilent 5973 MSD (available from Agilent Technologies, Inc.)
   - Mode: SCAN mode

### 5. Melt Viscosity Stability

Melt viscosity stability was evaluated by the following method.

A resin composition in an amount corresponding to 55 g in terms of resin content was charged into a plastograph (Plastograph EC, available from Brabender), and kneaded at 230°C for 2 hours.

Torque values after the lapse of 5 minutes and 80 minutes were measured, and an increase in value was calculated.

### 6. Glass Transition Temperature (Tg)

The glass transition temperature (Tg) was measured by the following method.

Measurement was performed in accordance with the following 1) to 3) using a differential scanning calorimeter (available from TA Instruments, "DSC Q2000").
1) The resin composition was held at -50°C for 5 minutes, heated to 200°C at a temperature increase rate of 10°C/min, and then held for 1 minute.
2) The resin composition was cooled to -50°C at a cooling rate of 30°C/min, and held for 5 minutes.
3) The resin composition was heated to 200°C at a temperature increase rate of 10°C/min.

The glass transition temperature (Tg) was calculated from 3) above.

1,2-Butanediol available from FUJIFILM Wako Pure Chemical Corporation was used as 1,2-butanediol.

### Preparation and Evaluation of Resin Composition

### Example 1

In a reaction vessel equipped with a reflux condenser, a dropping funnel, and a stirrer, 68.0 parts of vinyl acetate, 23.8 parts of methanol, and 8.2 parts of 3,4-diacetoxy-1-butene were charged, and Azobisisobutyronitrile was added in an amount of 0.3 mol% (based on the charged vinyl acetate). While the mixture was stirred, the temperature was raised under a nitrogen stream to initiate polymerization. When the polymerization conversion of vinyl acetate reached 90%, m-dinitrobenzene was added to terminate polymerization. Subsequently, unreacted vinyl acetate monomer was removed to the outside of the system by a method of blowing methanol vapor, to thereby prepare a methanol solution of the copolymer.

Next, the methanol solution was further diluted with methanol, adjusted to a concentration of 45%, and charged into a kneader. While the solution temperature was maintained at 35°C, a 2% methanol solution of sodium hydroxide was added in an amount of 10.5 mmol per 1 mol of the total amount of vinyl acetate structural units and 3,4-diacetoxy-1-butene structural units in the copolymer, to thereby perform saponification. As saponification progressed, the saponified product precipitated. When it became particulate, it was separated through filtration.

The polyvinyl alcohol separated through filtration was swollen for 1 hour in methanol at 30°C at a bath ratio of 6. After dropwise addition of 1,2-butanediol, stirring was continued for another 1 hour. The resultant product was separated through filtration again and dried at 60°C for 17 hours in a vacuum dryer to produce a resin composition.

The degree of saponification of the polyvinyl alcohol produced above was 99.2 mol%, as determined by analysis based on the alkali consumption required for hydrolysis of remaining vinyl acetate and 3,4-diacetoxy-1-butene. The average degree of polymerization of the PVA-based resin was 450, as determined by analysis in accordance with JIS K 6726-1994.

The content of 1,2-diol structural units in the polyvinyl alcohol was calculated from an integral value measured by ¹H-NMR (300 MHz proton NMR; d₆-DMSO solution; internal standard: tetramethylsilane; 50°C), and was 6 mol%.

The amount of 1,2-butanediol in the resin composition produced above was measured by the above-described measurement method. The glass transition temperature (Tg) of the resin composition was also measured by the above-described measurement method. Further, the torque values of the resin composition were measured by the above-described measurement method, and a torque increase value was calculated by subtracting the torque value after the lapse of 5 minutes from the torque value after the lapse of 80 minutes.

Based on the results of the glass transition temperature (Tg) and the torque increase value, a comprehensive evaluation was performed in accordance with the evaluation criteria described below. These evaluation criteria are rated, in descending order of superiority, as "A," "B," "C," and "D."

### Evaluation Criteria

A: Torque increase value is 30 Nm or less, and Tg is 60°C or higher
B: Torque increase value is 30 Nm or less, and Tg is lower than 60°C
C: Torque increase value exceeds 30 Nm, and Tg is 60°C or higher
D: Torque increase value exceeds 30 Nm, and Tg is lower than 60°C

The results are shown in Table 1.

### Examples 2 to 5, Comparative Example 1

The procedure of Example 1 was repeated, except that the amount of 1,2-butanediol added was changed as shown in Table 1. The results are shown in Table 1.

In Comparative Example 1, 1,2-butanediol was not added during preparation of the resin composition, and, even when the above "4. Measurement of 1,2-Butanediol Amount" was performed, the amount of 1,2-butanediol was equal to or less than the detection limit (N.D.: 0.1 ppm). Accordingly, the resin composition of Comparative Example 1 is regarded as containing no 1,2-butanediol.

### [Table 1]

**Table 1**

| | 1,2-Butanediol amount (ppm) | Torque (Nm) | | | Tg (°C) | Evalua tion |
|---|---|---|---|---|---|---|
| | | 5 min | 80 min | Increase value | | |
| Example 1 | 3.9 | 9.6 | 29.8 | 20.2 | 68.4 | A |
| Example 2 | 8.9 | 9.7 | 29.9 | 20.2 | 68.1 | A |
| Example 3 | 38.5 | 10.1 | 29.1 | 19.0 | 63.6 | A |
| Example 4 | 270.0 | 9.7 | 33.6 | 23.9 | 69.0 | A |
| Example 5 | 557.5 | 10.1 | 29.8 | 19.7 | 59.1 | B |
| Comparative Example 1 | - | 9.5 | 43.4 | 33.9 | 55.7 | D |

From the viewpoint of processing stability during melt extrusion, the torque increase value is preferably 30 Nm or less. As shown in Table 1 above, in Examples 1 to 5, in which 1,2-butanediol was mixed with the PVA-based resin composition, the torque increase value was equal to or less than 30 Nm, i.e., the upper limit value. As compared with Comparative Example 1, in which 1,2-butanediol was not contained, the torque increase was suppressed in Examples 1 to 5, and the melt viscosity stability was favorable.

From the viewpoint of heat resistance of the laminate during practical use, the glass transition temperature (Tg) is preferably 60°C or higher. Although the glass transition temperature (Tg) tended to decrease as the content of 1,2-butanediol increased, a significant decrease was not shown in Examples 1 to 5, as compared with Comparative Example 1. In particular, the resin compositions of Examples 1 to 4 had a glass transition temperature (Tg) of 60°C or higher, and it was found that they have high thermal stability in addition to excellent melt viscosity stability.

Specific embodiments of the present invention have been described in the above Examples, but the above Examples are merely illustrative and are not to be construed as limiting. Various modifications apparent to those skilled in the art are intended to be within the scope of the present invention.

The present invention has been described in detail with reference to specific embodiments. However, it would be clear to a person skilled in the art that various changes and modifications can be made without departing from the spirit and scope of the present invention. This application is based on Japanese Patent Application (Japanese Patent Application No. 2024-003886) filed on January 15, 2024, the content of which is incorporated herein by reference.

### Industrial Applicability

The resin composition of the present invention contains a PVA-based resin and has sufficient melt viscosity stability during melt molding, and therefore can be suitably used for various packaging materials, particularly food packaging materials such as coffee capsules.

## Claims

1. A resin composition comprising a polyvinyl alcohol-based resin having a primary hydroxyl group on a side chain, and 1,2-butanediol.

2. The resin composition according to claim 1, wherein a content of the 1,2-butanediol in the resin composition is 0.1 to 1000 ppm.

3. The resin composition according to claim 1, wherein a content of the 1,2-butanediol in the resin composition is 0.5 to 400 ppm.

4. The resin composition according to claim 1, wherein the polyvinyl alcohol-based resin having a primary hydroxyl group on a side chain has a structural unit represented by Formula (3) described below: 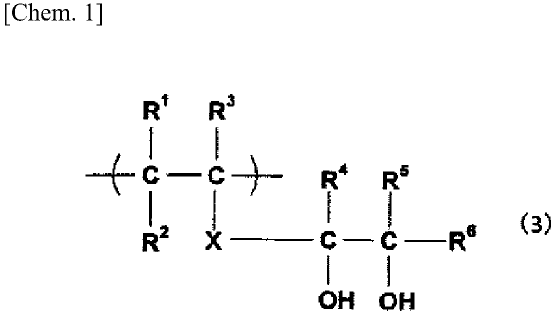 where, in Formula (3), R¹ to R⁶ each independently represent a hydrogen atom or an alkyl group having from 1 to 4 carbons, and X represents a single bond or a binding chain.

5. A film or sheet formed from the resin composition described in any one of claims 1 to 4.

6. A multilayer structure comprising at least one layer of the film or sheet described in claim 5.
